# EUROPÄISCHE PATENTSCHRIFT

(11) **EP 2 584 189 B1**
(45) Veröffentlichungstag und Bekanntmachung des Hinweises auf die Patenterteilung: **10.05.2017**
(21) Anmeldenummer: 12188190.8
(22) Anmeldetag: 11.10.2012
(51) Int. Cl.: F03B 13/22, F03B 17/04

(54) **Vorrichtung zur Energiegewinnung**
Device for generating energy
Dispositif de production d'énergie

(30) Priorität: 17.10.2011 DE 102011116033
(43) Veröffentlichungstag der Anmeldung: 24.04.2013
(73) Patentinhaber: Brandl, Silke, 84164 Moosthenning (DE)
(72) Erfinder: Brandl, Silke, 84164 Moosthenning (DE)
(74) Vertreter: advotec.

(56) Entgegenhaltungen:
- WO-A1-98/41758
- WO-A1-99/46502
- WO-A2-2006/051393
- DE-U1-202008 006 931
- FR-A1- 2 401 329
- US-A- 4 447 740
- US-A- 5 136 173
- US-A1- 2009 211 241

## Beschreibung

Die vorliegende Erfindung betrifft eine Vorrichtung zur Energiegewinnung unter Nutzbarmachung einer Wasserströmung in einem Steigrohr.

Aufgrund immer knapper werdender Energieressourcen, insbesondere fossiler Brennstoffe, wie beispielsweise Erdöl und Erdgas, werden alternative Energiegewinnungsmethoden immer wichtiger. Die bisher bekannten alternativen Energiegewinnungsmethoden haben jedoch diverse Nachteile.

Die derzeit wichtigste alternative Energiequelle ist die Atomkraft. Diese Energiegewinnungsmethode ist allerdings bekanntermaßen mit großen Gefahren verbunden, weshalb ein Ausstieg aus der Kernenergie in Deutschland bereits beschlossene Sache ist. Geringe Mengen des Energiebedarfs werden durch Windkraftwerke gedeckt. Diese Kraftwerke haben jedoch den Nachteil, dass sie auf Wind angewiesen sind. Bei Windstille kann deshalb keine Energie gewonnen werden.

Ferner sind aus dem Stand der Technik Vorrichtungen zur Gewinnung von elektrischer Energie aus potentieller Energie bekannt. Insbesondere aus Wasserkraft wird Energie aus dem natürlichen Kreislauf der Verdampfung und des Aufsteigens von Wasser, der Kondensation mit anschließendem Niederschlag und der daraus resultierenden Erhöhung potentieller Energie des Wassers genutzt. Die derartig gewonnene potentielle Energie resultiert mittelbar aus der Sonnenenergie, mit deren Hilfe das Wasser verdampft und durch die Thermik nach oben transportiert wird. Nachteilig an einer derartigen mittelbaren Nutzung der Sonnenenergie sind vor allem die notwendigen geografischen und geologischen Voraussetzungen sowie der enorme Flächenverbrauch durch die benötigten Wasserspeicher.

Ferner existiert die direkte Nutzung der Sonnenenergie beispielsweise durch Fotovoltaikanlagen (Solarzellen) oder Sonnenkollektoren. Nachteilig an dieser Nutzungsform ist vor allem die Abhängigkeit von einer möglichst hohen Sonnenscheindauer, wodurch diese Form der Nutzung der Sonnenenergie nur in entsprechend geeigneten Klimazonen sinnvoll ist.

DE 10 2007 015 986 A1 beschreibt eine Vorrichtung, bei der durch Absenken eines Steigrohres in einem Gewässer die in dem Steigrohr entstehende Wasserströmung nutzbar gemacht werden soll. Allerdings ist der Druck, der bei einer derartigen Vorrichtung im Steigrohr erzeugt wird, zu klein für eine effektive Energiegewinnung.

US 4 447 740 A beschreibt eine Vorrichtung, welche zur Energiegewinnung aus einer Wasserströmung ausgeführt ist. Diese Vorrichtung umfasst einen Schwimmkörper und einen dem Schwimmkörper gegenüberliegenden Rohrabschnitt, welcher als Steigrohr aufgefasst werden kann. In dem Steigrohr ist ein Energieumwandlungselement in Ausführungsform einer Turbine angeordnet. Durch die Wasserströmung im Steigrohr, welche durch ein Absenken und Anheben der Vorrichtung im Wasser erzeugt wird, rotiert die Turbine derart, dass aus der Rotationsbewegung eine elektrische Energie gewonnen werden kann.

WO 98/41758 A1 offenbart eine Vorrichtung, welche auf einem Meeresboden verankert ist und mittels einer Wasserströmung Energie gewinnt.

US 5 136 173 A offenbart eine Vorrichtung zur Energiegewinnung aus einer Wasserströmung. Die Vorrichtung umfasst einen Schwimmkörper, der einer Wellenbewegung folgt, und eine Einheit, welche an dem Schwimmkörper mittels einer Stange angeordnet ist.

US 2009/211241 A1 offenbart eine Vorrichtung, die einen Schwimmkörper aufweist, welcher einer Wellenbewegung folgt.

WO 2006/051393 A2 beschreibt ein Rohrsystem, welches als Vorrichtung zur Energiegewinnung durch Wasserströmung aufgefasst werden kann.

WO 99/46502 A1 offenbart eine Vorrichtung zur Energiegewinnung und Nutzbarmachung einer Wasserströmung, welche ebenfalls ein Steigrohr umfasst, in welchem ein Energiewandlungselement angeordnet ist. Dieses Element wandelt eine Wasserströmung im Steigrohr, die durch Absenken und/oder Anheben der Vorrichtung im Wasser erzeugbar ist, in elektrische Energie um, wobei sich am Steigrohr ein trichterartiges Element anschließt. Das Absenken bzw. Anheben der Vorrichtung kann auch über einen Motor erfolgen, welcher über eine Fotovoltaikanlage angetrieben wird. Der Nachteil dieser Vorrichtung besteht darin, dass diese mit einer Plattform fest verbunden ist und die Energie durch eine Bewegung der ganzen Plattform hinsichtlich des Gewässers erzeugt wird. Dies ist natürlich mit erheblichem Aufwand und Energie verbunden.

Der vorliegenden Erfindung liegt die Aufgabe zugrunde, eine Vorrichtung und ein Verfahren zur Energiegewinnung zur Verfügung zu stellen, welche die Nachteile der bisher bekannten Energiegewinnungsmethoden überwindet.

Diese Aufgabe wird durch eine Vorrichtung mit den Merkmalen des Anspruchs 1 sowie einem Verfahren mit den Merkmalen des Anspruchs 6 gelöst.

Ein Vorteil der erfindungsgemäßen Vorrichtung bzw. des erfindungsgemäßen Verfahrens liegt u. a. auch darin, dass die einzige Bedingung, welche für den Betrieb der erfindungsgemäßen Vorrichtung erfüllt sein muss, das Vorhandensein von Wasser ist. Die erfindungsgemäße Vorrichtung funktioniert im Prinzip schon bei Gewässern mit geringen Tiefen, wie beispielsweise seichten Flüssen oder Seen. Beim Betrieb der erfindungsgemäßen Vorrichtung wird diese zunächst - mit einem trichterartigen Element voran - in ein Gewässer abgesenkt. Dadurch strömt Wasser zunächst in das trichterartige Element und bei weiterem Absenken mit erhöhtem Druck in das sich an das trichterartige Element anschließende Steigrohr. Wie auch in den Figuren zu erkennen ist, ist der Durchmesser des Steigrohres wesentlich geringer als der Durchmesser des trichterartigen Elements. Aus diesem Grunde durchströmt das Wasser beim Absenken der erfindungsgemäßen Vorrichtung das Steigrohr mit wesentlich höherem Druck als das trichterartige Element.

Bei einer bevorzugten Ausführungsform der erfindungsgemäßen Vorrichtung ist das Energiewandlungselement eine Turbine, die wiederum vorzugsweise einen Generator oder Verbraucher antreibt. Ein mögliches Beispiel einer derartigen Ausführungsform wird in den Figuren und der dazugehörigen Beschreibung näher dargestellt.

Das Absenken und/oder Anheben der Vorrichtung in Wasser erfolgt mindestens teilweise aktiv, nämlich über einen Motor, welcher über eine Fotovoltaikanlage angetrieben wird. Durch einen derartigen Motor wird das Absenken der Vorrichtung unterstützt. Das Anheben der Vorrichtung zur Wiederholung des Energiegewinnungsvorganges wird aktiv durchgeführt.
Es ist mindestens eine, vorzugsweise mehrere Vorrichtungen an einer Plattform - ähnlich einer Ölplattform - angeordnet. Eine derartige Plattform befindet sich in der Regel im Meer oder einem großen See.

Bei der erfindungsgemäßen Vorrichtung schließen sich vorzugsweise an beiden Enden des Steigrohres jeweils ein trichterartiges Element an. Bei dieser Ausführungsform kommt es - je nach dem, ob die Vorrichtung abgesenkt oder angehoben wird - zu einer Wasserströmung im Steigrohr von unten nach oben bzw. von oben nach unten. Eine derartige Ausführungsform weist in der Regel eine Doppelturbine im Steigrohr auf, um einen Wasserstrom unabhängig von seiner Richtung in nutzbare Energie umzuwandeln.

Die vorliegende Erfindung betrifft ferner ein Verfahren zur Energiegewinnung mit den Merkmalen des Anspruchs 5.

In aller Regel wird die erfindungsgemäße Vorrichtung nach dem Absenken im Wasser wieder angehoben, wobei vorzugsweise auch beim Anheben der Vorrichtung das Energiewandlungselement angetrieben wird. Wie bereits oben angedeutet, wird dies insbesondere über eine Doppelturbine bewerkstelligt.

Wie bereits erwähnt, wird auch beim erfindungsgemäßen Verfahren das Absenken und/oder Anheben der Vorrichtung im Wasser mindestens teilweise aktiv, nämlich über einen Motor, welcher über eine Fotovoltaikanlage angetrieben wird, ausgeführt.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: eine Vorrichtung für das erfindungsgemäße Verfahren im Arbeitseinsatz;
- Figur 2:: eine Plattform mit der Vorrichtung von Fig. 1;
- Figur 3:: einen Ausschnitt aus dem Steigrohr der Vorrichtung von Fig. 1 im Bereich der Turbine;
- Figur 4:: eine erfindungsgemäße Vorrichtung mit zwei trichterartigen Elementen.

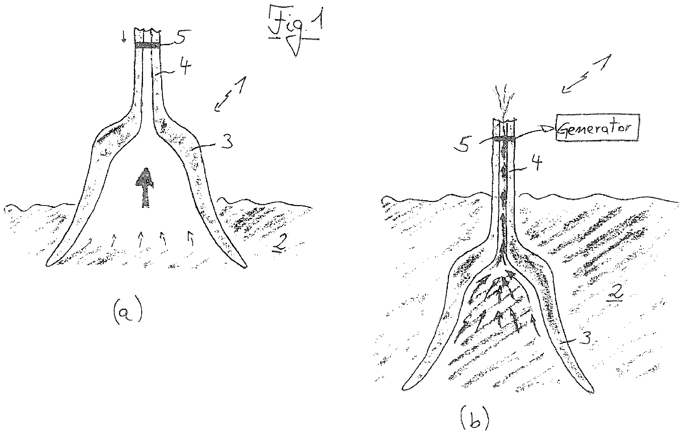

Figur 1 zeigt eine Vorrichtung 1, welche in Wasser 2 abgesenkt wird. Die Darstellung a) zeigt die Vorrichtung 1 am Anfang des Absenkvorganges, wobei die Darstellung b) die Vorrichtung in einem Stadium zeigt, in dem der Energiegewinnungsvorgang in vollem Gange ist.
Die Vorrichtung 1 weist ein trichterartiges Element 3 sowie ein sich an das trichterartige Element anschließendes Steigrohr 4 auf. Das Steigrohr 4 geht direkt in das trichterartige Element 3 über, wobei deren Lumina miteinander in Verbindung stehen. Im Inneren des Steigrohres 4 ist eine Turbine 5 angeordnet, die in der vorliegenden Abbildung lediglich schematisch dargestellt ist. Die Turbine 5 ist wiederum mit einem Stromgenerator, welche hier nicht dargestellt ist, verbunden.

Die Energiegewinnung mit Hilfe der Vorrichtung 1 läuft wie folgt ab: Zunächst wird die Vorrichtung 1 mit dem trichterartigen Element 3 voran in ein Gewässer 2 abgesenkt. Spätestens dann, wenn das trichterartige Element 3 komplett im Wasser versenkt ist (siehe Fig. 1b), ist das Innere des trichterartigen Elements 3 vollständig mit Wasser ausgefüllt und strömt in das Steigrohr 4. Die Strömung des Wassers ist durch die Pfeile angedeutet. Aufgrund der Tatsache, dass der Durchmesser des Steigrohres 4 wesentlich geringer ist als der Durchmesser des trichterartigen Elements, wird das Wasser mit erhöhtem Druck in das Steigrohr 4 gedrückt, sodass im Steigrohr 4 ein nach oben gerichteter Wasserstrom mit hohem Druck entsteht. Durch diesen Wasserstrom im Steigrohr 4 wird die Turbine 5 im Steigrohr 4 angetrieben, d. h. dass es zu einer Rotation der Turbine 5 im Steigrohr 4 kommt. Durch den mit der Turbine 5 in Verbindung stehenden Generator wird die Drehbewegung der Turbine in elektrische Energie umgewandelt und kann weiterbenutzt werden.
Die Turbine wird bereits durch den ersten Luftstrom, welcher durch das aufsteigende Wasser erzeugt wird, angetrieben. Je tiefer die Vorrichtung 1 abgesenkt wird, desto höher ist der Druck im Steigrohr und desto effektiver ist die Energiegewinnung.

Ein großer Vorteil der erfindungsgemäßen Vorrichtung liegt darin, dass keine optischen und/oder akustischen Beeinträchtigungen der Umwelt zu befürchten sind.

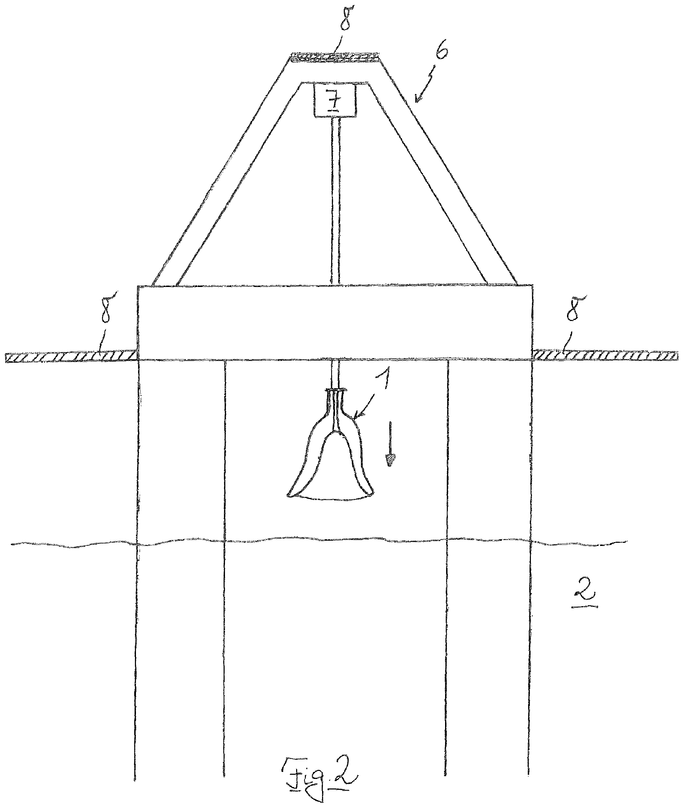

Figur 2 zeigt eine Plattform 6, an welcher die Vorrichtung 1 angeordnet ist. Bei der hier dargestellten Ausführungsform erfolgt das Absenken und Anheben der Vorrichtung 1 mit Hilfe eines Motors 7, welcher wiederum durch Energie angetrieben wird, welche durch Fotovoltaikmodule 8 erzeugt wird. Die Plattform 6 befindet sich im freien Ozean.

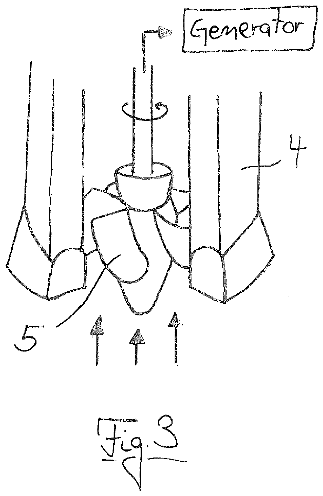

Figur 3 zeigt einen Ausschnitt aus dem Steigrohr 4 im Bereich der Turbine 5. Der besseren Übersicht halber wurde ein Teil des Mantels des Steigrohres in der Darstellung weggelassen, sodass die Turbine 5 gut zu erkennen ist.

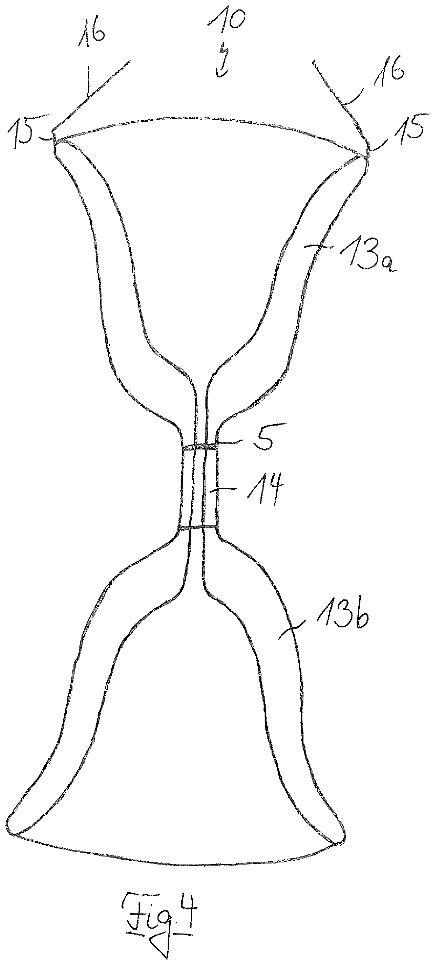

Figur 4 zeigt eine erfindungsgemäße Vorrichtung 10. Bei dieser Vorrichtung 10 schließt sich an beiden Enden des Steigrohres 14 jeweils ein trichterartiges Element 13a bzw. 13b an. Das obere trichterartige Element weist Mittel 15 zur Befestigung jeweils eines Seils 16 auf. Mit Hilfe dieser Seile wird die Vorrichtung 10 abgesenkt bzw. angehoben. Im Inneren des Steigrohrs 14 ist eine hier nicht dargestellte Doppelturbine angeordnet. Mit Hilfe der Vorrichtung 10 kann im Steigrohr 14 sowohl eine Wasserströmung von unten nach oben als auch von oben nach unten erzeugt werden. Die Richtung des Wasserstromes im Steigrohr 14 ist davon abhängig, ob die Vorrichtung abgesenkt (Strom von unten nach oben) oder angehoben (Strom von oben nach unten) wird. Das Lumen des unteren trichterartigen Elements 13b dient quasi als Reservoir für das Wasser, welches für den Absenkvorgang nutzbar gemacht werden kann. Das Lumen des oberen trichterartigen Elements 13a dient wiederum als Reservoir für das Wasser, welches beim Anheben der Vorrichtung 10 nutzbar gemacht werden kann.

Es versteht sich, dass auch andere Formen von trichterartigen Elementen möglich sind. Das Entscheidende ist, dass ein Aufnahmebehälter für Wasser geschaffen wird, welcher in das wesentlich schmälere Steigrohr übergeht. Neben trichterartigen Formen sind auch glockenartige, pyramidenförmige, kegelförmige o. ä. Ausführungsformen möglich.

## Patentansprüche

1. Vorrichtung (1, 10) zur Energiegewinnung unter Nutzbarmachung einer Wasserströmung, umfassend ein Steigrohr (4), in welchem ein Energiewandlungselement (5) angeordnet ist, welches eine Wasserströmung im Steigrohr, die durch Absenken und/oder Anheben der Vorrichtung in Wasser erzeugbar ist, in nutzbare Energie, insbesondere elektrische Energie umwandelt, wobei sich an einem Ende des Steigrohres ein trichterartiges Element (3) anschließt, **dadurch gekennzeichnet, dass** die Vorrichtung (1) an einer Plattform (6) angeordnet ist, wobei das Absenken und/oder Anheben der Vorrichtung (1) in Wasser (2) mindestens teilweise aktiv über einen Motor (7) erfolgt, welcher an der Plattform (6) angeordnet ist und über eine Fotovoltaikanlage (8) angetrieben wird.

2. Vorrichtung nach Anspruch 1, **dadurch gekennzeichnet, dass** das Energiewandlungselement eine Turbine (5) ist, die wiederum vorzugsweise einen Generator oder Verbraucher antreibt.

3. Vorrichtung nach einem der vorhergehenden Ansprüche, **dadurch gekennzeichnet, dass** mehrere Vorrichtungen (1, 10) an der Plattform (6) angeordnet sind.

4. Vorrichtung nach einem der vorhergehenden Ansprüche, **dadurch gekennzeichnet, dass** das Bewegen der Vorrichtung (1, 10) in einem natürlichen Gewässer, insbesondere See oder Meer erfolgt.

5. Verfahren zur Energiegewinnung, **dadurch gekennzeichnet, dass** eine Vorrichtung (1, 10), umfassend ein trichterartiges Element (3) sowie ein sich an das trichterartige Element anschließendes Steigrohr (4), in welchem ein Energiewandlungselement (5) angeordnet ist, mit dem trichterartigen Element (3) voran in einem Gewässer (2) abgesenkt wird, sodass Wasser vom Inneren des trichterartigen Elements in das mit dem trichterartigen Element in Verbindung stehende Steigrohr (4) gedrückt und dadurch eine Wasserströmung im Steigrohr erzeugt wird, wobei durch die Wasserströmung das Energiewandlungselement (5) angetrieben wird, welches die Wasserströmung in nutzbare Energie, insbesondere elektrische Energie umwandelt, wobei die Vorrichtung an einer Plattform (6) angeordnet ist, und wobei das Absenken und/oder Anheben der Vorrichtung (1, 10) im Wasser (2) mindestens teilweise aktiv über einen Motor (7) erfolgt, welcher an der Plattform (6) angeordnet ist und über eine Fotovoltaikanlage (8) angetrieben wird.

6. Verfahren nach Anspruch 5, **dadurch gekennzeichnet, dass** die Vorrichtung (1, 10) nach dem Absenken im Wasser (2) wieder angehoben wird, wobei vorzugsweise auch beim Anheben der Vorrichtung das Energiewandlungselement (5) angetrieben wird.

## Claims

1. A device (1, 10) for generating energy by utilizing a water flow, comprising a riser pipe (4) in which an energy conversion element (5) is arranged which converts a water flow in the riser pipe producible by lowering and/or lifting the device in water into usable energy, in particular electrical energy, a funnel-like element (3) being adjacent to one end of the riser tube, **characterized in that** the device (1) is arranged on a platform (6), the device (1) being lowered and/or lifted in water (2) in an at least partially active manner by means of a motor (7) which is arranged on the platform (6) and driven via a photovoltaic installation (8).

2. The device according to claim 1, **characterized in that** the energy conversion element is a turbine (5) which, in turn, preferably drives a generator or a load.

3. The device according to any one of the preceding claims, **characterized in that** multiple devices (1, 10) are arranged on the platform (6).

4. The device according to any one of the preceding claims, **characterized in that** the device (1, 10) is moved in a natural body of water, in particular a lake or a sea.

5. A method for generating energy, **characterized in that** a device (1, 10) comprising a funnel-like element (3) and a riser pipe (4) which is adjacent to the funnel-like element and in which an energy conversion element (5) is arranged is lowered with the funnel-like element (3) first into a body of water (2) so that water is pushed from the inside of the funnel-like element into the riser pipe (4) being in communication with the funnel-like element and thus a water flow is generated in the riser pipe, the water flow driving the energy conversion element (5), which converts the water flow into usable energy, in particular electrical energy, the device being arranged on a platform (6), and the device (1, 10) being lowered and/or lifted in the water (2) in an at least partially active manner by means of a motor (7) arranged on the platform (6) and driven by a photovoltaic installation (8).

6. The method according to claim 5, **characterized in that** after being lowered in the water (2), the device (1, 10) is lifted again, the energy conversion element (5) preferably also being driven while the device is being lifted.

## Revendications

1. Dispositif (1, 10) de production d'énergie par l'utilisation d'un écoulement d'eau, comprenant un conduit montant (4) dans lequel un élément de conversion d'énergie (5) est disposé qui convertit un écoulement d'eau dans le tube montant pouvant être produit en baissant et/ou soulevant le dispositif dans l'eau en énergie usable, notamment en énergie électrique, un élément de type entonnoir (3) étant adjacent à une extrémité du tube montant, **caractérisé en ce que** le dispositif (1) est disposé sur une plateforme (6), le dispositif (1) étant baissé et/ou soulevé dans l'eau (2) de manière au moins partiellement active par un moteur (7) qui est disposé sur la plateforme (6) et entraîné par une installation photovoltaïque (8).

2. Dispositif selon la revendication 1, **caractérisé en ce que** l'élément de conversion d'énergie est une turbine (5) qui entraîne à son tour un générateur ou un consommateur.

3. Dispositif selon l'une quelconque des revendications précédentes, **caractérisé en ce que** plusieurs dispositifs (1, 10) sont disposés sur la plateforme (6).

4. Dispositif selon l'une quelconque des revendications précédentes, **caractérisé en ce que** le dispositif (1, 10) est agité dans une eau naturelle, notamment dans un lac ou une mer.

5. Procédé de production d'énergie, **caractérisé en ce qu'**un dispositif (1, 10) comprenant un élément de type entonnoir (3) et un tube montant (4) qui est adjacent à l'élément de type entonnoir et dans lequel un élément de conversion d'énergie (5) est disposé est baissé dans une eau (2), l'élément de type entonnoir (3) d'abord, de sorte que de l'eau est pressée à partir de l'intérieur de l'élément de type entonnoir dans le tube montant (4) en communication avec l'élément de type entonnoir et ainsi un écoulement d'eau est produit dans le tube montant, l'écoulement d'eau entraînant l'élément de conversion d'énergie (5) qui convertit l'écoulement d'eau en énergie usable, notamment en énergie électrique, le dispositif étant disposé sur une plateforme (6) et le dispositif (1, 10) étant baissé et/ou soulevé dans l'eau (2) de manière au moins partiellement active par un moteur (7) qui est disposé sur la plateforme (6) et entraîné par une installation photovoltaïque (8).

6. Procédé selon la revendication 5, **caractérisé en ce que** le dispositif (1, 10) est soulevé de nouveau après l'abaissement dans l'eau (2), l'élément de conversion d'énergie (5) étant entraîné de préférence même pendant le soulèvement du dispositif.
